# EUROPEAN PATENT APPLICATION

(11) **EP 2 141 414 A1**
(43) Date of publication of application: **06.01.2010**
(21) Application number: 08159671.0
(22) Date of filing: 04.07.2008
(51) Int. Cl.: F23G 5/02, F23G 5/44, F23K 1/00, B01F 15/00, B28C 7/00, C04B 7/00, F27B 7/00

(54) **Controlling stacking of a stockpile**

(71) Applicant: ABB Research LTD, 8050 Zürich (CH)
(72) Inventor: Stadler, Konrad, 8166 Niederweningen (CH); Gallestey Alvarez, Eduardo, 5522 Tägerig (CH)
(74) Representative: ABB Patent Attorneys

(57) **Abstract**

The present invention is concerned with the field of industrial mining for raw materials, and in particular for controlling the stacking of a stockpile (2) continuously fed from a plurality of quarries (1). To control the stacking of the stockpile, a controller platform (3) is provided which receives material information of the raw material to be delivered to a crusher (4) from the trucks (5), material information about the raw material on a conveyer belt (6) by a material composition sensor (7), weight information of the raw material on the conveyer belt delivered to a first location of the stockpile from a weight sensor (8), and a stacker position information from a stacker (9). Based on the received information, the controller platform selects one of the plurality of quarries for delivering raw material to the first location of the stockpile.

## Description

### FIELD OF THE INVENTION

The invention relates to the field of industrial mining of minerals and in particular to cement production.

### BACKGROUND OF THE INVENTION

Cement is produced in large, hollow, internally sloping cylinders known as kilns where raw meal is heated up to 1500°C and transformed into clinker. Lime stone is the main ingredients in the raw meal fed to the kiln, while the fuels used for heating include both conventional fuels such as coal, oil and natural gas and alternative fuels like tires, plastics and solvents. As the cement producers are paid for burning alternative fuels or incinerating wastes, there is a strong interest in extending this practice and replacing traditional fuels as much as possible. On the other hand, the ashes from the combustion go directly into the cement clinker, and since the chemical composition of the alternative fuels is variable, constraints on the final cement composition can only be satisfied if traditional fuels serve to compensate for these variations.

Different quarries, different zones within a mine or different times of exploitation or mining may represent distinct sources feeding or supplying raw material of distinct qualities to a single intermediate storage or stockpile. For instance, from different exploitation sites within a quarry or mine trucks of different sizes transport raw materials of different chemical composition to a crusher, where the material is crushed to approximately fist size. From there the material is distributed on a stockpile or mixing bed for homogenization. Here, the variability of the raw material is reduced at an early stage of the process line, which leads to significant advantages and benefits. For example in the case of the cement process a constant CaCO₃ level in the raw material will lead to more stable sintering and therefore more uncertainty in the burning conditions can be allowed. Hence smaller variations in the input material allow larger variations in the fuel composition, and ultimately a larger proportion of waste fuels can be used without jeopardizing the final cement composition or grade. Other examples are directed to the stockpiling of bauxite in alumina plants or iron ore concentrate in iron mines.

In cement production as well as other industrial applications such as scrap material processing and process waste handling, bulk raw materials are transported in high volumes on a continuously moving means such as a conveyor belt after the materials have been crushed or otherwise reduced in size for purposes of easier handling in downstream production. Typical bulk materials include heterogeneous masses of coarsely crushed mined or quarried bulk materials such as ores of limestone, bauxite, copper, zinc, lead, iron, silica, phosphate rock, potash, clay, rare earths. Other bulk materials transported similarly include scrap materials, chalk, coal and coke, alumina, marl, pyrite, fly ash, process waste, etc. Such bulk materials are utilized in process streams in which the bulk materials are fed or supplied from a source continuously, in batches, or over an extended period of time.

During the transportation and processing of bulk materials, it becomes necessary to analyze the exact or average chemical or mineral content and composition of the bulk material for control purposes. Measuring a material composition is especially necessary when the bulk materials are mixed, ground, or processed to form new materials.

The patent US 7,310,581 discloses a robust, consistent, real-time bulk material analyzing system for identifying and quantifying the elemental, chemical, and mineralogical characteristics of a varying bulk material. The system comprises an illumination source that projects light on to a surface of a stream of material passing unobstructed and undisturbed under a detector array with at least one spectrometer that captures light reflected, emitted, or absorbed by the stream.

### DESCRIPTION OF THE INVENTION

It is an objective of the invention to control a composition of a stockpile composed of bulk raw materials with distinct properties. This objective is achieved by a method of and system for controlling the stacking of a stockpile according to the claims 1 and 6. Further preferred embodiments are evident from the dependent patent claims.

According to the invention, a material composition of a stockpile, i.e. an intermediate stock or reservoir that is continuously fed from or supplied by at least two distinct sources with raw materials of distinct composition or quality is controlled in real-time during the stacking process. For each of the at least two sources, an indication about the composition or quality of the material offered or provided by the respective source is obtained. An analysis of the material composition at a particular location or spot of the stockpile is performed or updated on-line, i.e. without interrupting the stacking process. Depending on the quality of the available material and the analysed composition, the source for the next raw material delivery due at the location of the stockpile is selected so as to change or maintain the composition at that location.

In the specific example of a mining exploitation, the source-wise indication of the bulk raw material composition may be done off-line, based on a chemical analysis of a sample taken from the actual exploitation site, and updated at convenient intervals. In this context, different quarries, different zones within a mine or different times of exploitation or mining may represent distinct sources. Contrary thereto, the analysis of the material composition at various spots of the stockpile is performed on-line, i.e. while the stacking is ongoing and without inducing any waiting time. This necessitates the use of a real-time bulk material analysing system for identifying and quantifying the elemental, chemical, and mineralogical characteristics of a varying bulk material. The visible light spectrometer-based analysing system mentioned above is well suited for this task, as are other systems based e.g. on X-ray analysis. In the present context, a location of the stockpile may be defined by a one or two dimensional coordinate. Considering the fact that the stockpile is raised by stacking or adding material on top and subsequently worked from the side, i.e. at a right angle to the stacking direction, the composition at said location may well be an average composition over the height of stockpile at said coordinate.

In particular, the focus of the control may be on a reduced variability or increased homogeneity of the material composition throughout the stockpile. In this case, less stringent requirements regarding the quality of alternative fuels in a subsequent cementing process are to be imposed, and ultimately more alternative fuels may be used.

In a preferred variant of the invention, the real-time bulk material analysing system is not itself being moved from one location of the stockpile to the next in order to perform the location dependent on-line analysis of the bulk material quantity already present at a particular location. Instead, the analysing system is positioned at a central collection point such as a truck entrance gate, a conveyor belt or a stacker, and permanently analysing the composition of bulk raw material passing by in discrete amounts or as a continuous stream of material. A control system in this case is able to relate the discrete amounts or the stream of material being analysed to the location of the stockpile to which the discrete amount or the stream of material is directed and where the latter will be stacked. Advantageously, the control system has a memory for recording the composition and quantity of previous deliveries to the same location, which allows updating the average composition upon each new delivery.

In a preferred embodiment of the invention, a feed rate or quantitative measure such as a weight or volume of each discrete amount of material delivered is determined, e.g. by measuring the weight of a loaded truck, and transmitted to the control system. Likewise, a quantitative measure might involve a mass flow of a continuous stream of material as determined by appropriate means at the conveyor. Hence the control system can relate mass and composition and thus improve the averaging at the targeted location of the stockpile.

In an advantageous embodiment directed to the coordination of a multitude of trucks supplying discrete amounts or individual truck loadings from various quarries to a crusher, the weight of each loading is communicated to the control system by means of wireless communication. This is preferably done as soon as the weight of the loading is available, i.e. while the truck is just about to leave the quarry. At the control system, this information together with the indication on the respective bulk raw material composition is evaluated and an order of arrival at the crusher is derived and communicated to the trucks. Likewise, the indication about the composition or quality of the material offered by a source as well as actuator signals for commanding and dispatching trucks may be transmitted by wireless communication.

In a further embodiment, a control system is aware of a delivery capacity of each of the plurality of sources, including the availability and capacity of mining or loading equipment such as wheel loaders and mobile cranes. In order to manipulate the reclaiming positions from a quantitative perspective, the control system adapts the delivery capacity of the selected sources by making loaders or cranes move from one source to another.

### BRIEF DESCRIPTION OF THE DRAWINGS

The subject matter of the invention will be explained in more detail in the following text with reference to preferred exemplary embodiments which are illustrated in the attached drawings, in which:
Fig.1 schematically shows a process chain from quarries to a stockpile;
Fig.2 depicts functional blocks of a stockpile stacking controller; and
Fig.3 is a flowchart illustrating a preferred method for controlling the stacking of a stockpile continuously fed from a plurality of sources.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

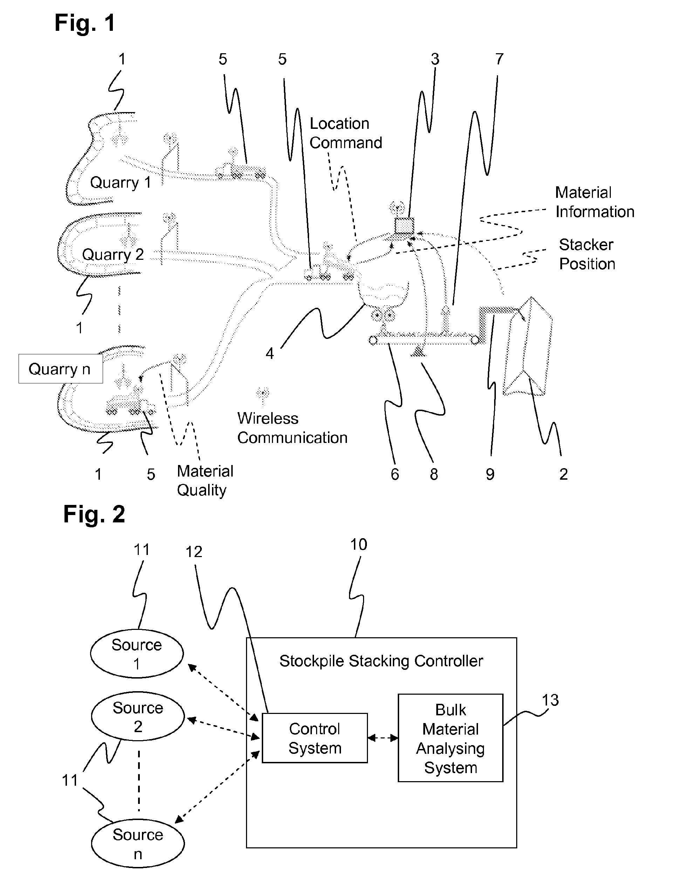

Fig.1 shows an exemplary process chain for the delivery of raw materials from quarries 1 to a stockpile 2. The figure shows a controller platform 3, which receives material information of the raw material to be delivered to a crusher 4 from trucks 5, material information about the raw material on a conveyer belt 6 from a material composition sensor 7, weight information of the raw material on the conveyer belt 6 delivered to a first location on the stockpile 2 from a weight sensor 8, and a stacker position information from a stacker 9.

The material information received at the controller platform 3 from the trucks 5 is transmitted from the trucks 5 by using wireless communication means, for example, Radio Frequency (RF) ID or toll collect systems. Wireless communication means are also used to enable tracking and advising of the trucks 5 by the controller platform 3. Some trucks 5 may also be equipped with pressure sensors to provide information about the loading of a truck. Using these pressure sensors, the trucks 5 are able to determine the weight of the raw material being carried by them. The trucks 5 can then transmit this weight information to the controller platform 3 by using the mentioned wireless communication means. Also, at different locations of the quarries 1, the material type of the raw material is transmitted to a chip on a truck, delivering the material to the crusher 4. Also, the weight of the raw material measured by the pressure sensors of these trucks may be stored on this on-board chip of the truck. While returning from a quarry to the crusher 4, both material type and the loading or weight information of the material can be transmitted as current values from the on-board chip of the truck to the controller platform 3, which can then take corrective actions for stacking of the stockpile 2.

At some quarries 1, the wireless communication means capabilities are limited and therefore only near range communication means are used for transfer of information. In this case, the information can not be transmitted to the on-board chip of the truck by using the wireless communication means, but is transferred to the controller platform 3 by a storage device, for example, a memory chip, containing all the necessary information which is carried on the truck itself.

After the material from the trucks 5 is delivered to the crusher 4, it is crushed to approximately fist size and then transported to the stacker 9 over the conveyer belt 6. While the material is being transported to the stacker 9 over the conveyer belt 6, the material composition sensor 7 measures the composition of the raw material on the conveyer belt 6. The material composition sensor 7 can be, for example, a visible light spectrometer-based analysing system or an X-ray based analysing system. The visible light spectrometer-based analysing system determines the elemental characteristics of the raw material by passing a white light through the material passing over the conveyer belt 6 and using a spectral sensor for capturing the spectral reflectance from the raw material. The elemental characteristics of the raw material are determined by analyzing the spectral reflectance of the raw material.

In an embodiment of the invention, other information, like the feed rate of the material on the conveyer belt 6 or the stacker position of the stacker 9, can also be measured. The stacker 9, as shown in Fig.1, is laterally displaceable and its position corresponds to the first location on the stockpile 2.

When all the above mentioned information is available to the controller platform 3, a model predictive control algorithm derives the material requests from different locations or quarries 1. The model predictive control algorithm is an optimization algorithm and is usually designed such that the variation of one or several composition indicators is minimized. For example, a typical composition target is the lime saturation factor used in the cement production process. Any other target indicator or optimization cost function can also be used to derive the material requests from different locations.

The controller platform 3 and the model predictive control algorithm makes sure that the correct amount of the raw material from a correct quarry or a locations within a quarry is delivered to the crusher 4. Also, the controller platform 3 detects any wrong material delivered to the first location of the stockpile 2 and corrects it in subsequent deliveries to the same location.

Fig.2 shows functional blocks of a stockpile stacking controller 10. The stockpile stacking controller 10 controls the stacking of raw materials at a first location of the stockpile 2, which is continuously fed from a plurality of sources 11. The plurality of sources 11 can be the same as the quarries 1 or they can be different locations or zones within a single quarry. Different times of exploitation or extraction of raw material from the same location of a quarry also represent distinct sources of raw material. Typically, the stockpile stacking controller 10 works in an actuator system consisting of trucks 5 commuting between the plurality of sources 11 or the quarries 1, and the crusher 4. In this system, at least the trucks 5 and/or the different quarry locations or sources 11 are equipped with wireless communication means to send information to a control system 12 and to receive commands from it. This way, a near closed loop control is achieved by communicating commands to the trucks 5 by the control system 12, based on the quantity and quality of the raw material, and also taking periodic information of measurements for quantity and quality of the raw material from each source of the plurality of sources 11.

In the actuator system, each source of the plurality of sources 11 delivers a bulk raw material of a different material composition to the crusher 4, from where the material is delivered to the stacker 9, using the conveyer belt 6. Thereafter, the stacker 9 delivers the raw material to the first location of the stockpile 2.

To control the stacking of the stockpile 2, the stockpile stacking controller 10 includes the control system 12 and a bulk material analysing system 13. The bulk material analysing system 13 performs an on-line analysis of the material composition at a first location of the stockpile 2. The bulk material analysing system 13 can be a sensor device, like SOLBAS, which is a visible light spectrometer-based analysing system for determining composition of raw materials, or it can be an X-ray based material composition analysing system.

In one embodiment of the invention, the control system 12 is the controller platform 3 containing model based algorithm, such as model predictive control algorithm. The control system 12 selects one source of the plurality of sources 11 for delivering bulk raw material to the first location of the stockpile 2, based on the information provided by the bulk material analysing system 13 about the material composition of the raw material at the first location of the stockpile 2, and an indication of the bulk raw material composition for each of the plurality of sources 11. The indication on the bulk raw material composition for each source 11 is received by the stockpile stacking controller 10 by using wireless communication means.

In another embodiment of the invention, the control system 12 or the model predictive control algorithm also uses the position information of the stacker 9 or other process parameters, to select the source 11 for delivering raw material to the crusher 4. Also, in place of or in addition to the material composition information from the material chemistry sensor, like the bulk material analysing system 13, the control system 12 may use information coming from standard sample based analysis of the raw material at the first location of the stockpile 2. Further, decision regarding selection of the source 11 for delivering raw material can also be made based on a cost function. For example, the cost function can include elements related to transport cost from each source 11 to the crusher 4 and lifetime of each source 11.

Along with selecting the correct source 11 for delivering the raw material to the crusher 4, the control system 12 also communicates corrective measures to be taken at each source of the plurality of sources 11. For example, information on the available trucks 5 can be used to determine the maximum possible throughput and the information for the delivered material from each quarry or location within a single quarry can be compared with the amounts requested by the model predictive control algorithm to obtain the difference between the material delivered and the material requested. If the amount of material delivered is different from the amount requested, a message is sent to the quarry operator to take corrective measures, like redirecting heavy equipment, for example, excavators, from one quarry location or 'zone' to another.

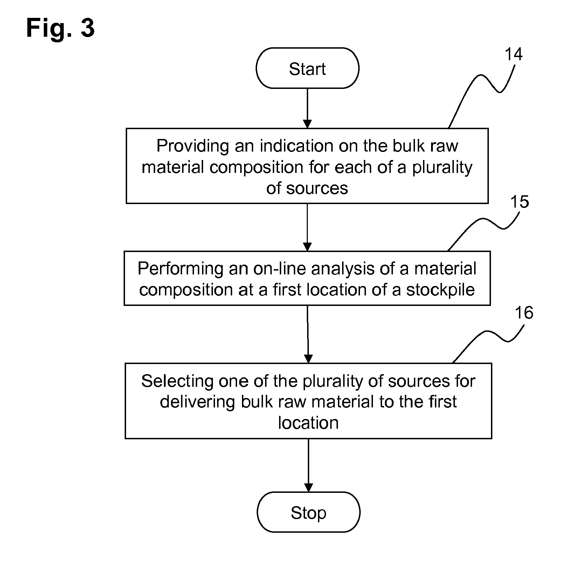

Fig.3 is a flow diagram illustrating a preferred method for controlling the stacking of the stockpile 2, which is continuously fed from the plurality of sources 11. The plurality of sources 11 can be same as quarries 1 or can be different locations within a single quarry. Each source of the plurality of sources 11 provides bulk raw material of different material composition to the stockpile 2. The stockpile 2 is fed with the bulk raw material using the trucks 5 commuting between the plurality or sources 11 and the crusher 4. From the crusher 4, the raw material is delivered to the stacker 9 using the conveyer belt 6 and thereafter, the stacker 9 delivers the raw material at a first location of the stockpile 2.

At step 14, an indication is provided on the bulk raw material composition for each source of the plurality of sources 11. The indication on the bulk raw material composition is provided at the source site, for example, the quarry site, and is communicated to the control system 12 by using wireless communication means. At step 15, an on-line analysis of a material composition at a first location of the stockpile 2 is performed. The on-line analysis is performed on a discrete amount or a continuous stream of bulk raw material directed to the first location of the stockpile 2. At step 16, one of the plurality of sources 11 is selected for delivering the bulk raw material to the first location of the stockpile 2, based on the on-line analysis of the material composition at the first location of the stockpile 2. Further, once a source is selected for delivering the bulk raw material to the first location, a quantitative measure of a discrete amount or a continuous stream of bulk raw material from the selected source is determined. Thereafter, the determined quantitative measure for the selected source is transmitted to the control system 12 by using wireless communication means, such as the Radio Frequency (RF) ID or the toll collect systems.

### LIST OF DESIGNATIONS

- 1: quarries
- 2: stockpile
- 3: controller platform
- 4: crusher
- 5: trucks
- 6: conveyer belt
- 7: material composition sensor
- 8: weight sensor
- 9: stacker
- 10: stockpile stacking controller
- 11: plurality of sources
- 12: control system
- 13: bulk material analysing system
- 14: first flowchart step
- 15: second flowchart step
- 16: third flowchart step

## Claims

1. A method of controlling the stacking of a stockpile (2) continuously fed from a plurality of sources (11), each source offering a bulk raw material of a different composition, the method comprising
- providing, for each of the plurality of sources (11), an indication on the composition of the bulk raw material offered by the respective source (11),
- performing an on-line analysis of a material composition at a first location of the stockpile (2),
- selecting one of the plurality of sources (11) based on the indication on the composition of the bulk raw material offered and the analysis of the material composition at the first location of the stockpile (2), and
- delivering bulk raw material from the selected source to the first location of the stockpile (2).

2. The method according to claim 1, wherein the on-line analysis is performed on a discrete amount, or on a continuous stream, of bulk raw material directed to the first location of the stockpile (2).

3. The method according to claim 2, wherein a quantitative measure of the discrete amount, or of the continuous stream, of bulk raw material directed to the first location of the stockpile (2) is determined.

4. The method according to claim 3, wherein the determined quantitative measure and/or the indication on the composition of the bulk raw material offered by a source (11) is transmitted to a control system (12) via wireless communication means.

5. The method according to claim 1, wherein a delivery capacity of a selected source is increased by moving loading equipment to the selected source.

6. A system (10) for controlling the stacking of a stockpile (2) continuously fed from a plurality of sources (11), each source offering a bulk raw material of a different composition, the system (10) comprising
- a bulk material analysing system (13) adapted to perform an on-line analysis of a material composition at a first location of the stockpile (2),
- a control system (12) adapted to select one of the plurality of sources (11) for delivering bulk raw material to said first location of the stockpile (2), based on the on-line analysis of the material composition at said first location and based on an indication on the composition of the bulk raw material offered by the selected source (11).

7. The system according to claim 6, wherein the bulk material analysing system (13) is arranged to perform an on-line analysis on a discrete amount, or on a continuous stream, of bulk raw material directed to the first location of the stockpile (2).

8. The system according to claim 7, wherein a weighting means is provided to determine a quantitative measure of the discrete amount, or of the continuous stream, of bulk raw material directed to the first location of the stockpile (2).
